# EUROPÄISCHE PATENTANMELDUNG

(11) **EP 2 952 983 A2**
(43) Veröffentlichungstag der Anmeldung: **09.12.2015**
(21) Anmeldenummer: 15166958.7
(22) Anmeldetag: 08.05.2015
(51) Int. Cl.: G05B 15/02, H05B 37/02

(54) **STEUERGERÄT, STEUERSYSTEM, BELEUCHTUNGSSYSTEM UND VERFAHREN ZUM BETRIEB SOLCHER SYSTEME**

(30) Priorität: 04.06.2014 DE 102014210532
(71) Anmelder: ROBERT BOSCH GMBH, 70442 Stuttgart (DE)
(72) Erfinder: Kohler, Ulrich, 70372 Stuttgart (DE); Nicolai, Jurjen, 61440 Oberursel (Taunus) (DE)

(57) **Zusammenfassung**

Die Erfindung betrifft ein Steuergerät, ein Steuersystem, ein Beleuchtungssystem sowie ein Verfahren zum Betrieb solcher Systeme, wobei ein Raumklima eines Raums eines Gebäudes erfasst wird, wobei eine Farbtemperatur und/oder eine Wellenlänge eines durch die Leuchteinrichtung abzugebenden Lichts in Abhängigkeit des Raumklimas gesteuert wird.

## Beschreibung

Die Erfindung betrifft ein Steuergerät gemäß Patentanspruch 1, ein Steuersystem gemäß Patentanspruch 4, eine Beleuchtungssystem gemäß Patentanspruch 5 sowie ein Verfahren zum Betrieb solcher Systeme gemäß Patentanspruch 10.

### Stand der Technik

Aus der DE 10 2008 027 981 A1 ist ein Überwachungsverfahren zur Gewährung eines schnellen Überblicks eines Funktionszustands und auch einer Optimierungsmöglichkeit für eine komplette energietechnische Anlage bekannt.

Es ist Aufgabe der Erfindung, ein verbessertes Steuergerät, ein verbessertes Steuersystem, ein verbessertes Beleuchtungssystem sowie ein verbessertes Verfahren zum Betrieb solcher Systeme bereitzustellen.

### Offenbarung der Erfindung

Diese Aufgabe wird mittels eines Steuergeräts gemäß Patentanspruch 1 gelöst. Vorteilhafte Ausführungsformen sind in den abhängigen Ansprüchen angegeben.

Erfindungsgemäß wurde erkannt, dass ein verbessertes Steuergerät dadurch bereitgestellt werden kann, dass das Steuergerät eine Schnittstelle und eine mit der Schnittstelle verbundene Steuereinrichtung umfasst. Die Schnittstelle ist mit einer Leuchteinrichtung und mit einem Sensor zur Erfassung eines Raumklimas oder eines Betriebsparameters einer Thermoanlage verbindbar. Die Schnittstelle ist ausgebildet, ein Sensorsignal des Sensors zu erfassen und der Steuereinrichtung bereitzustellen. Die Steuereinrichtung ist ausgebildet, in Abhängigkeit des Sensorsignals ein Steuersignal zur Steuerung einer Farbtemperatur und/oder einer Wellenlänge eines durch die Leuchteinrichtung abzugebenden Lichts zu ermitteln und an der Schnittstelle bereitzustellen.

Auf diese Weise kann dem Nutzer des Steuergeräts aus großer Entfernung eine Information über das Raumklima eines Raums des Gebäudes oder über einen Betriebsparameter der Thermoanlage gut ablesbar bereitgestellt werden.

In einer weiteren Ausführungsform weist das Steuergerät einen Speicher auf. Im Speicher ist ein Steuerparameter abgelegt. Die Steuereinrichtung ist ausgebildet, den Steuerparameter bei der Ermittlung des Steuersignals zur Steuerung der Leuchteinrichtung zu berücksichtigen. Der Steuerparameter weist vorzugsweise eine Kennlinie und/oder einen Toleranzbereich und/oder wenigstens einen Schwellenwert und/oder eine mathematische Funktion auf.

Ferner ist von Vorteil, wenn das Steuergerät eine Bedieneinrichtung umfasst. Die Bedieneinrichtung ist mit der Steuereinrichtung verbunden, wobei mittels der Bedieneinrichtung der Steuerparameter festlegbar ist. Auf diese Weise kann das Steuergerät durch den Nutzer an sein persönliches Nutzerverhalten angepasst werden.

Die Aufgabe kann aber auch durch ein Steuersystem gemäß Patentanspruch 4 gelöst werden.

Erfindungsgemäß wurde erkannt, dass ein verbessertes Steuersystem dadurch bereitgestellt werden kann, dass das Steuersystem ein Steuergerät, das wie oben beschrieben ausgebildet ist, und eine Leuchteinrichtung aufweist. Die Leuchteinrichtung ist mit der Schnittstelle verbunden, wobei die Leuchteinrichtung ausgebildet ist, den Betriebsparameter im Hintergrund und wenigstens einen weiteren Betriebsparameter der Thermoanlage in einem Vordergrund anzuzeigen, wobei die Steuereinrichtung ausgebildet ist, den Hintergrund der Leuchteinrichtung in Abhängigkeit des Sensorsignals zu steuern.

Die Aufgabe wird aber auch durch ein Beleuchtungssystem gemäß Patentanspruch 5 gelöst. Vorteilhafte Ausführungsformen sind in den abhängigen Ansprüchen angegeben.

Erfindungsgemäß wurde erkannt, dass ein verbessertes Beleuchtungssystem dadurch bereitgestellt werden kann, dass das Beleuchtungssystem ein Steuergerät, das wie oben beschrieben ausgebildet ist, eine Leuchteinrichtung und einen Sensor umfasst. Der Sensor und die Leuchteinrichtung sind mit der Schnittstelle verbunden. Der Sensor ist in einem Raum eines Gebäudes anordenbar und ausgebildet, ein Raumklima des Raums zu erfassen und in Abhängigkeit des erfassen Raumklimas das Sensorsignal bereitzustellen.

Dadurch kann die Leuchteinrichtung in Abhängigkeit des erfassen Raumklimas gesteuert werden.

In einer weiteren Ausführungsform ist der Sensor ausgebildet, eine Temperatur und/oder eine Feuchtigkeit eines in dem Raum vorhandenen Fluids zu erfassen. Alternativ oder zusätzlich ist auch denkbar, dass der Sensor ausgebildet ist, als Betriebsparameter eine Vorlauftemperatur und/oder eine Temperatur eines Warmwasserspeichers zu erfassen. Dadurch kann dem Nutzer auf einfache Weise mittels der Leuchteinrichtung eine Information über die Temperatur und/oder Feuchtigkeit und/oder Vorlauftemperatur und/oder eine Temperatur des Warmwasserspeichers auf einfache Weise bereitgestellt werden, ohne dass der Nutzer hierzu eine Anzeigeneinrichtung aus nächster Nähe ablesen muss.

In einer weiteren Ausführungsform ist die Steuereinrichtung ausgebildet, mit zunehmender Temperatur und/oder Feuchtigkeit eine Farbtemperatur der Leuchteinrichtung zu reduzieren oder zu vergrößern. Auf diese Weise kann dem Nutzer auf einfache Weise die Temperatur und/oder Feuchtigkeit signalisiert werden.

In einer weiteren Ausführungsform ist im Speicher ein erster Schwellenwert und ein zum ersten Schwellenwert abweichender zweiter Schwellenwert abgelegt. Der erste Schwellenwert korreliert mit einem ersten Raumklima und der zweite Schwellenwert mit einem zweiten Raumklima. Das Steuergerät ist ausgebildet, das Sensorsignal mit den beiden Schwellenwerten zu vergleichen, wobei das Steuergerät bei einem Unterschreiten beider Schwellenwerte durch einen zu dem Sensorsignal korrelierenden Wert die Leuchteinrichtung derart anzusteuern, dass die Leuchteinrichtung ein Licht mit einer Farbtemperatur oberhalb 12000 K, vorzugsweise oberhalb 14000 K, insbesondere oberhalb 15000 K, und/oder mit wenigstens einer Wellenlänge in einem Bereich von 400 nm bis 490 nm, emittiert. Bei einem Unterschreiben des zweiten Schwellenwerts und einem Überschreiten des ersten Schwellenwerts durch einen zu dem Sensorsignal korrelierenden Wert ist die Steuereinrichtung ausgebildet, dass die Leuchteinrichtung ein Licht mit einer Farbtemperatur oberhalb 3000 K, vorzugsweise oberhalb 3300 K und unterhalb 14000 K, insbesondere unterhalb 12000 K, emittiert. Ferner ist das Steuergerät ausgebildet, bei einem Überschreiten beider Schwellenwerte durch einen zu dem Sensorsignal korrelierenden Wert die Leuchteinrichtung derart anzusteuern, dass die Leuchteinrichtung ein Licht mit einer Farbtemperatur unterhalb 3000 K, vorzugsweise unterhalb 2500 K, und/oder mit wenigstens einer Wellenlänge in einem Bereich von 590 nm bis 700 nm, emittiert. Ferner ist von Vorteil, wenn die Leuchteinrichtung ausgebildet ist, zumindest teilweise den Raum mit wenigstens 10 Lux, vorzugsweise wenigstens 20 Lux, insbesondere wenigsten 30 Lux, zu beleuchten.

Die Aufgabe wird aber auch durch ein Verfahren gemäß Patentanspruch 10 gelöst.

Erfindungsgemäß wurde erkannt, dass ein verbessertes Verfahren zum Betrieb eines oben beschriebenen Steuergeräts, eines oben beschriebenen Steuersystems und eines oben beschriebenen Beleuchtungssystems dadurch bereitgestellt werden kann, dass ein Raumklima eines Raums eines Gebäudes erfasst wird, wobei eine Farbtemperatur und/oder eine Wellenlänge eines durch die Leuchteinrichtung abzugebenden Lichts in Abhängigkeit des Raumklimas gesteuert wird.

Nachfolgend wird die Erfindung anhand von Figuren näher erläutert. Dabei zeigen:
- Figur 1: eine schematische Darstellung eines Steuersystems;
- Figur 2: ein Ablaufdiagramm für ein Verfahren zum Betrieb des in Figur 1 gezeigten Steuersystems; und
- Figur 3: eine schematische Darstellung eines Beleuchtungssystems.

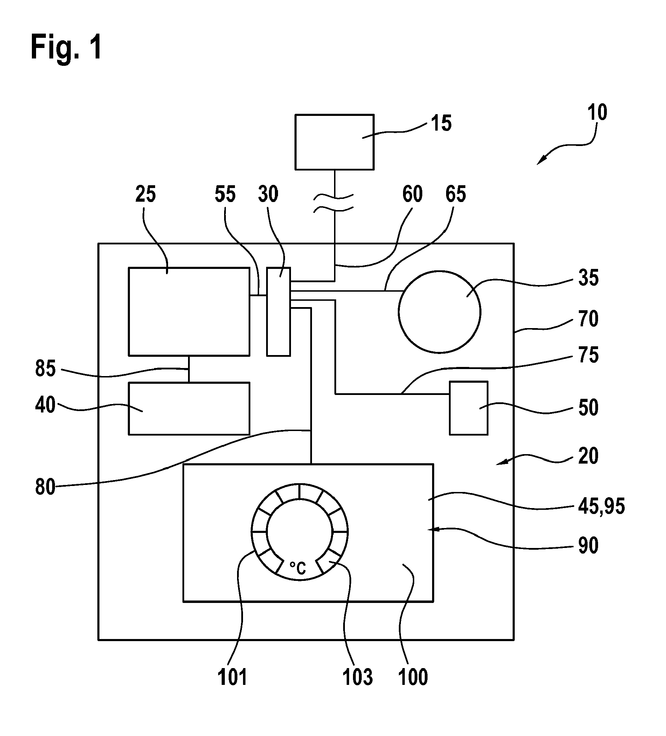

Figur 1 zeigt eine schematische Darstellung eines Steuersystems 10 für eine Thermoanlage 15.

Das Steuersystem 10 umfasst ein Steuergerät 20. Das Steuergerät 20 ist als Raumregler der Thermoanlage 15 ausgebildet. Das Steuergerät 20 umfasst eine Steuereinrichtung 25, eine Schnittstelle 30, eine Bedieneinrichtung 35, einen Speicher 40, eine Leuchteinrichtung 95 sowie einen Temperatursensor 50. Die Schnittstelle 30 ist mit der Steuereinrichtung 25 mittels einer ersten Verbindung 55 verbunden. Die Schnittstelle 30 kann dabei als mechanische Anbindung ausgebildet sein, die die Steuereinrichtung 25 mit weiteren Komponenten des Steuersystems 10 verbindet. Selbstverständlich ist auch denkbar, dass die Schnittstelle 30 eine eigene Logik aufweist und beispielsweise als Analog-Digital-Wandler ausgebildet ist.

Ferner ist die Schnittstelle 30 ist ihrerseits mittels einer zweiten Verbindung 60 mit der Thermoanlage 15 verbunden. Des Weiteren ist die Schnittstelle 30 mit der Bedieneinrichtung 35 über eine dritte Verbindung 65 verbunden.

Der Sensor 50 ist mittels einer vierten Verbindung 75 mit der Schnittstelle 30 verbunden. Der Sensor 50 ist in der Ausführungsform in einem Gehäuse 70 des Steuergeräts 20 angeordnet. Selbstverständlich ist auch denkbar, dass der Sensor 50 außerhalb des Gehäuses 70 beispielsweise in einem Raum eines Gebäudes angeordnet ist. Die Leuchteinrichtung 95 ist mittels einer fünften Verbindung 80 mit der Schnittstelle 30 verbunden. Der Speicher 40 ist mittels einer sechsten Verbindung 85 mit der Steuereinrichtung 25 verbunden.

Die Thermoanlage 15 dient dazu, einen Raum eines Gebäudes und/oder ein Gebäude zu klimatisieren, also eine Temperatur und/oder eine Feuchtigkeit eines in dem Raum des Gebäudes angeordneten Fluids zu verändern. Dazu kann beispielswiese die Thermoanlage 15 eine Wärmepumpeneinrichtung, einen Heizkessel, einen Thermospeicher und/oder ein Kältegerät umfassen.

Der Sensor 50 ist ausgebildet ein Raumklima des Raums zu erfassen. Dazu kann der Sensor 50 beispielsweise als Temperatursensor und/oder als Feuchtigkeitssensor ausgebildet sein und erfasst eine Temperatur und/oder Feuchtigkeit des in dem Raum angeordneten Fluids. Der Sensor 50 stellt beispielsweise ein zum erfassten Raumklima bzw. zur erfassten Temperatur und/oder Feuchtigkeit korrespondierendes Sensorsignal über die vierte Verbindung 75 der Schnittstelle 30 bereit.

Die Leuchteinrichtung 95 ist als Anzeigeeinrichtung 45 ausgebildet und umfasst eine Darstellungseinrichtung 90. Die Leuchteinrichtung 95 ist ausgebildet Licht zu emittieren. Die Darstellungseinrichtung 90 ist ausgebildet, einen Betriebsparameter der Thermoanlage 15 in einem Hintergrund 100 und einen weiteren Betriebsparameter mit einem Anzeigenelement 101 in einem Vordergrund 103 der Leuchteinrichtung 95 darzustellen. Der im Vordergrund 103 dargestellte weitere Betriebsparameter kann beispielsweise eine Solltemperatur des Raums sein. Der im Hintergrund 100 dargestellte Betriebsparameter kann beispielsweise die durch den Sensor erfasste Temperatur und/oder Feuchtigkeit des Raums sein.

Im Speicher 40 ist ein Steuerparameter abgelegt. Der Steuerparameter weist beispielsweise eine Kennlinie und/oder einen Toleranzbereich und/oder wenigstens einen Schwellenwert und/oder eine mathematische Funktion auf. Der Steuerparameter kann beispielsweise mittels der Bedieneinrichtung 35 festgelegt werden. Auch kann mittels der Bedieneinrichtung 35 beispielsweise die Betriebsparameter der Thermoanlage 15 festgelegt werden.

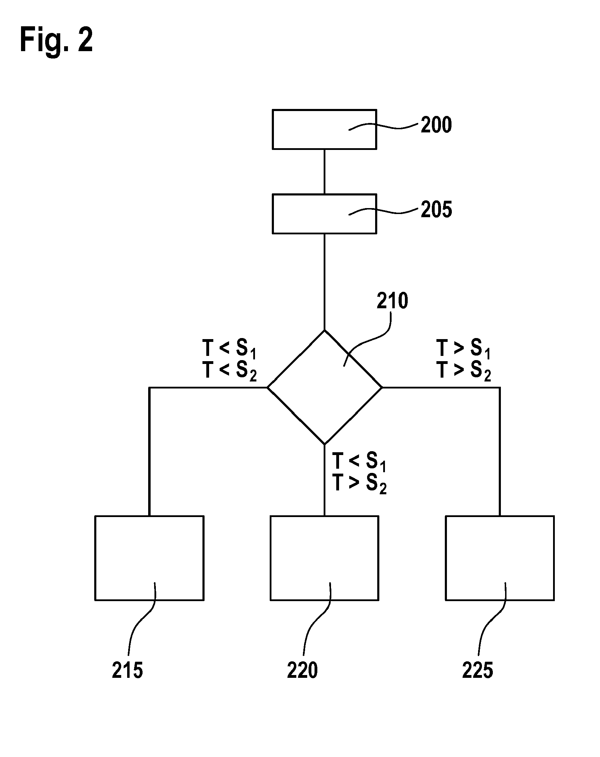

Figur 2 zeigt ein Ablaufdiagramm zum Betrieb des in Figur 1 gezeigten Steuersystems 10.

In einem ersten Verfahrensschritt 200 erfasst der Sensor 50 beispielhaft eine Temperatur des in dem Raum befindlichen Fluids. Der Sensor 50 stellt ein korrespondierend zur erfassten Temperatur ausgebildetes Sensorsignal der Schnittstelle 30 bereit. Die Schnittstelle 30 stellt über die erste Verbindung 55 das erfasste Sensorsignal der Steuereinrichtung 25 bereit. Ferner erfasst die Steuereinrichtung 25 das bereitgestellte Sensorsignal.

In einem zweiten Verfahrensschritt 205 ruft die Steuereinrichtung 25 den im Speicher 40 abgelegten Steuerparameter ab. In der Ausführungsform umfasst der Steuerparameter einen ersten Schwellenwert S₁ und einen vom ersten Schwellenwert S₁ abweichenden zweiten Schwellenwert S₂. Der erste Schwellenwert S₁ korreliert dabei mit einem ersten Raumklima beispielsweise einer ersten Temperatur und der zweite Schwellenwert S₂ korreliert dabei mit einem zweiten Raumklima beispielsweise einer zweiten Temperatur, wobei die zweite Temperatur höher als die erste Temperatur ist. So ist beispielsweise denkbar, dass der erste Schwellenwert mit einer Temperatur von 18 °C korreliert, während hingegen der zweite Schwellenwert mit einer Temperatur von 30 °C korreliert.

In einem dritten Verfahrensschritt 210 vergleicht die Steuereinrichtung 25 das erfasste Sensorsignal mit den beiden Schwellenwerten. In Abhängigkeit des Ergebnisses des Vergleichs fährt die Steuereinrichtung 25 mit einem vierten Verfahrensschritt 215, einem fünften Verfahrensschritt 220 oder einem sechsten Verfahrensschritt 225 fort.

Im vierten, fünften und sechsten Verfahrensschritt 215, 220, 225 ist gemein, dass die Steuereinrichtung 25 in Abhängigkeit des Ergebnisses des Vergleichs bzw. in Abhängigkeit des Sensorsignals ein Steuersignal an der Schnittstelle 30 zur Steuerung der Leuchteinrichtung 95 bereitstellt. Unterschreitet dabei das Sensorsignal, das mit einem Wert der Temperatur korreliert, der kleiner ist als der erste Schwellenwert S₁ und kleiner ist als der zweite Schwellenwert S₂, so fährt die Steuereinrichtung 25 mit dem vierten Verfahrensschritt 215 fort. Im vierten Verfahrensschritt 215 steuert die Steuereinrichtung 25 mittels eines Steuersignals die Leuchteinrichtung 95 derart an, dass die Leuchteinrichtung 95 ein Licht mit einer Farbtemperatur oberhalb von 12000 K, vorzugsweise oberhalb 14000 K, insbesondere oberhalb 15000 K emittiert. Alternativ oder zusätzlich ist denkbar, dass die Leuchteinrichtung 95 ein Licht mit wenigstens einer Wellenlänge in einem Bereich von 400 nm bis 490 nm emittiert. Dadurch wird das emittierte Licht durch die Leuchteinrichtung 95 bläulich.

Unterschreitet die erfasste Temperatur den zweiten Schwellenwert S₂ und ist dabei größer als der erste Schwellenwert S₁, fährt die Steuereinrichtung 25 mit dem fünften Verfahrensschritt 220 fort. Im fünften Verfahrensschritt 220 steuert die Steuereinrichtung 25 die Leuchteinrichtung 95 derart an, dass die Leuchteinrichtung 95 ein Licht mit einer Farbtemperatur oberhalb 3000 K, vorzugsweise oberhalb 3300 K und unterhalb 12000 K, insbesondere unterhalb 14000 K, emittiert. Dadurch wirkt das Licht weißlich.

Überschreitet die Temperatur den ersten Schwellenwert S₁ und den zweiten Schwellenwert S₂, so fährt die Steuereinrichtung 25 mit dem sechsten Verfahrensschritt 225 fort. Im sechsten Verfahrensschritt 225 steuert die Steuereinrichtung 25 die Leuchteinrichtung 95 derart an, dass die Leuchteinrichtung 95 ein Licht mit einer Farbtemperatur unterhalb 3300 K, vorzugsweise unterhalb 3000 K emittiert. Alternativ oder zusätzlich ist denkbar, dass die Leuchteinrichtung 95 ein Licht mit wenigstens einer Wellenlänge in einem Bereich von 590 nm bis 700 nm emittiert. Dadurch wirkt das Licht rötlich.

In der Ausführungsform können die beiden Schwellenwerte S₁, S₂ beispielsweise mit der Bedieneinrichtung 35 eingestellt werden, sodass die beiden Schwellenwerte S₁, S₂ individuell an das Nutzerverhalten angepasst werden können.

Auch ist denkbar, dass der Steuerparameter eine Kombination aus der Kennlinie und/oder dem Toleranzbereich und/oder Schwellenwert und/oder mathematischen Funktion aufweist. So ist beispielsweise denkbar, dass anstatt eines Umschaltens an den einzelnen Schwellenwerten S₁, S₂ auf die jeweilige Farbtemperatur der Leuchteinrichtung 95 die Leuchteinrichtung 95 zwischen den beiden Schwellenwerten S₁, S₂ kontinuierlich in Abhängigkeit des Sensorsignals in ihrer Farbtemperatur übergeht. Auch ist denkbar, dass in einem Bereich oberhalb des zweiten Schwellenwerts S₂ bzw. in dem Bereich unterhalb des ersten Schwellenwerts S₁ nach Überschreiten bzw. Unterschreiten des jeweiligen Schwellenwerts S₁, S₂ ab da dann kontinuierlich die Farbtemperatur verringert bzw. erhöht wird.

Durch die farbabhängige Steuerung der Leuchteinrichtung 95 kann ein Hintergrund 100 der Darstellungseinrichtung 90 temperaturgesteuert farblich angepasst werden. Dadurch kann auf einfache Weise die Anzeigeeinrichtung 45 auch aus großer Entfernung für den Nutzer einfach ablesbar gestaltet werden, da der Nutzer aufgrund des Hintergrunds 100 bereits aus großer Entfernung den Betriebsparameter ablesen kann und beispielsweise erkennen kann, ob der Raum zu warm oder zu kalt geheizt ist.

Alternativ oder zusätzlich ist auch denkbar, dass der Sensor 50 anstatt oder zusätzlich zu der Temperatur des Raums eine Feuchtigkeit des Fluids erfasst. Der Sensor 50 stellt dann ein Sensorsignal, das mit der Feuchtigkeit des im Raum befindlichen Fluids korreliert, bereit. Die Auswertung des Sensorsignals und die Ansteuerung der Leuchteinrichtung 95 erfolgt wie oben beschrieben. Dies ist insbesondere dann von Vorteil, wenn beispielsweise durch den Hintergrund 100 auf einfache Weise signalisiert werden kann, ob die Feuchtigkeit in dem Raum zu hoch oder zu niedrig ist. Dies ist insbesondere dann von Vorteil, wenn in dem Raum feuchtigkeitsempfindliche Gegenstände wie beispielsweise Kunstwerke, Musikinstrumente oder Antiquitäten gelagert werden.

Selbstverständlich ist auch denkbar, dass der Sensor 50 sowohl Temperatur als auch Feuchtigkeit erfasst. Auch ist denkbar, dass der Sensor 50 einen Betriebsparameter der Thermoanlage 15 erfasst. So kann beispielsweise der Sensor 50 in einem Warmwasserspeicher angeordnet sein und eine Temperatur des im Speicher 40 angeordneten Warmwassers erfassen. Auch wäre denkbar, dass der Sensor 50 als Betriebsparameter eine Vorlauftemperatur eines Heizkreislaufs erfasst.

Die Auswertung des entsprechend durch den Sensor 50 gelieferten Sensorsignals, das nun abhängig vom Betriebsparameter der Thermoanlage 15 ist, erfolgt analog wie oben beschrieben. Dabei kann der Steuerparameter entsprechend an den auszuwertenden Betriebsparameter selbstverständlich angepasst werden. So ist beispielsweise denkbar, dass für den ersten Schwellenwert S₁ eine Temperatur von 10 °C und für den zweiten Schwellenwert S₂ eine Temperatur von 60 °C gewählt wird. Auf diese Weise kann signalisiert werden, dass der Warmwasserspeicher erwärmt oder kalt ist.

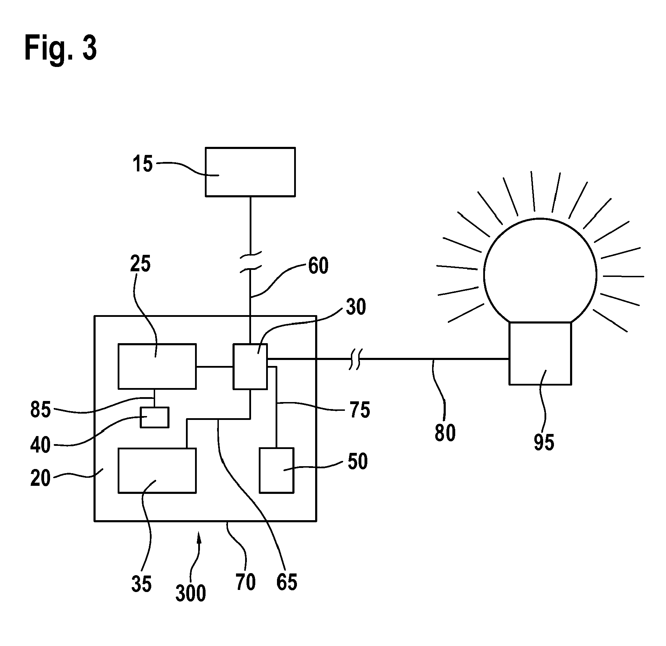

Figur 3 zeigt eine schematische Darstellung eines Beleuchtungssystems 300. Das Beleuchtungssystem 300 ist ähnlich zu dem Steuersystem 10, wie in den Figuren 1 und 2 beschrieben, ausgebildet. Die Leuchteinrichtung 95 ist dabei ausgebildet, einen Raum eines Gebäudes mit wenigstens 10 Lux, vorzugsweise 20 Lux, vorzugsweise 30 Lux, zu beleuchten.

Das Steuergerät 20 ist im Wesentlichen identisch zu dem in Figur 1 gezeigten Steuergerät 20 ausgebildet. Entsprechend kann das Beleuchtungssystem 300 auch das in Figur 2 beschriebene Verfahren zum Betrieb des Beleuchtungssystems 300 durchführen. Dies hat insbesondere den Vorteil, dass das Steuergerät 20 uneinsehbar in dem Raum angeordnet werden kann und trotzdem mittels der Leuchteinrichtung 95 dem Nutzer eine Information über das Raumklima gegeben werden kann, ohne dass weitere zusätzliche Gerätschaften, insbesondere mobile Rechner, Mobiltelefone oder Ähnliches notwendig sind.

Es wird darauf hingewiesen, dass der Steuerparameter selbstverständlich auch anders gewählt werden kann. Insbesondere ist hierbei denkbar, dass der Steuerparameter derart ausgebildet ist, dass anhand des Steuerparameters die Steuereinrichtung 25 eine zur Temperatur und Feuchtigkeit korrelierende optimale Farbtemperatur ermittelt und die Leuchteinrichtung 95 entsprechend ansteuert. Dies hat den Vorteil, dass der Nutzer durch die geänderte Farbtemperatur, die entsprechend an das Raumklima angepasst ist, besonders angenehm das Raumklima empfindet. Dies ist insbesondere dann von Vorteil, wenn die Leuchteinrichtung 95 kontinuierlich ihre Wellenlänge bzw. ihre Farbtemperatur über ihr abzugebendes Farbspektrum verändern kann. Auch ist denkbar, dass mehrere Leuchteinrichtungen 95 vorgesehen sein können um ein Wellenlängenspektrum und/oder die Farbtemperatur festzulegen.

Es wird darauf hingewiesen, dass die in den Figuren 1 und 3 dargestellten Verbindungen 55, 60, 65, 75, 80, 85 sowohl drahtgestützt als auch drahtlos ausgebildet sein können. Dabei ist insbesondere von Vorteil, wenn die zweite Verbindung 60 zur Verbindung der Thermoanlage 15 mit dem Steuergerät 20 drahtlos, insbesondere nach dem Wi-Fi-Standard, ausgebildet ist, da so auf einfache Weise das Steuergerät 20 ohne die Verlegung von Leitungen optimal im Raum angeordnet werden kann. Ferner werden dadurch auch die Installationskosten reduziert. Gleiches gilt auch hierbei für die fünfte Verbindung 80 zur Verbindung des Steuergeräts 20 mit dem Sensor 50. Es wird ferner darauf hingewiesen, dass anstatt eines einzelnen Sensors 50 selbstverständlich auch eine Vielzahl von Sensoren 50 mit dem Steuergerät 20 verbunden werden können.

Auch ist denkbar, dass das Steuergerät 20 mit einer Mehrzahl von Leuchteinrichtungen 95 verbunden ist, sodass das Steuergerät 20 in Abhängigkeit der in dem Raum entsprechend angeordneten Sensoren 50 die jeweils im Raum angeordnete Leuchteinrichtung 95 steuert. Auf diese Weise kann beispielsweise ein Gebäude mit einer Mehrzahl von Sensoren 50 und einer Mehrzahl von Leuchteinrichtungen 95 durch das Steuergerät 20 betrieben werden.

Ferner ist denkbar, dass das Steuergerät 20 bei der Ermittlung der anzusteuernden Farbtemperatur/Wellenlänge des durch die Leuchteinrichtung 95 abzugebenden Lichts eine Tageszeit mitberücksichtigt, um so eine Helligkeit bzw. einen von der Leuchteinrichtung 95 abzugebenden Lichtstrom zu berücksichtigen. So ist beispielsweise denkbar, dass dann der Hintergrund 100 tagsüber heller erleuchtet ist als nachts.

Auch ist denkbar, dass die Steuereinrichtung 25 ausgebildet ist, mit zunehmender Temperatur und/oder Feuchtigkeit des Fluids im Raum die Farbtemperatur und/oder Wellenlänge des durch die Leuchteinrichtung 95 abzugebenden Lichts der Leuchteinrichtung 95 zu reduzieren oder zu vergrößern.

Auch ist denkbar, dass die Steuereinrichtung 25 bei Überschreiten des ersten Schwellenwerts S₁ und gleichzeitig bei Unterschreiten des zweiten Schwellenwerts S₂ die Leuchteinrichtung 95 tagsüber und/oder allgemein deaktiviert. Auf diese Weise kann nur bei einem Überschreiten des zweiten Schwellenwerts S₂ und/oder einem Unterschreiten des ersten Schwellenwerts S₁ die Leuchteinrichtung 95 aktiviert werden, um so dem Nutzer eine entsprechende Raumtemperatur und/oder Feuchtigkeit oder einen entsprechenden Betriebsparameter der Thermoanlage 15 auf einfache Weise zu signalisieren.

Ferner ist denkbar, dass die Bedieneinrichtung 35 und die Anzeigeeinrichtung 45 zusammen als berührungssensitiver Monitor ausgebildet sind. Dabei ist auch denkbar, dass das Steuersystem als mobiles Gerät, insbesondere als Mobiltelefon, mobiler Rechner oder ähnliches ausgebildet ist.

## Patentansprüche

1. Steuergerät (20),
- aufweisend eine Schnittstelle (30) und eine mit der Schnittstelle (30) verbundene Steuereinrichtung (25)
- wobei die Schnittstelle (30) mit einer Leuchteinrichtung (95) und mit einem Sensor (50) zur Erfassung eines Raumklimas und/oder eines Betriebsparameters einer Thermoanlage (15) verbindbar ist,
- wobei die Schnittstelle (30) ausgebildet ist, ein Sensorsignal des Sensors (50) zu erfassen und der Steuereinrichtung (25) bereitzustellen,
- **dadurch gekennzeichnet, dass**
- die Steuereinrichtung (25) ausgebildet ist, in Abhängigkeit des Sensorsignals ein Steuersignal zur Steuerung einer Farbtemperatur und/oder einer Wellenlänge eines durch die Leuchteinrichtung (95) abzugebenden Lichts zu ermitteln und an der Schnittstelle (30) bereitzustellen.

2. Steuergerät (20) nach Anspruch 1,
- aufweisend einen Speicher (40),
- wobei in dem Speicher (40) ein Steuerparameter abgelegt ist,
- wobei die Steuereinrichtung (25) ausgebildet ist, den Steuerparameter bei der Ermittlung des Steuersignals zur Steuerung der Leuchteinrichtung (95) zu berücksichtigen,
- wobei der Steuerparameter vorzugsweise eine Kennlinie und/oder einen Toleranzbereich und/oder wenigstens einen Schwellenwert und/oder eine mathematische Funktion aufweist.

3. Steuergerät (20) nach Anspruch 2 oder 3,
- aufweisend eine Bedieneinrichtung (35),
- wobei die Bedieneinrichtung (35) mit der Steuereinrichtung (25) verbunden ist,
- wobei mittels der Bedieneinrichtung (35) der Steuerparameter festlegbar ist.

4. Steuersystem (10)
- aufweisend ein Steuergerät (20) nach einem der Ansprüche 1 bis 3 und eine Leuchteinrichtung (95),
- wobei die Leuchteinrichtung (95) mit der Schnittstelle (30) verbunden ist,
- wobei die Leuchteinrichtung (95) ausgebildet ist, den Betriebsparameter im Hintergrund (100) und wenigstens einen weiteren Betriebsparameter der Thermoanlage (15) in einem Vordergrund (103) anzuzeigen,
- wobei die Steuereinrichtung (25) ausgebildet ist, den Hintergrund (100) der Leuchteinrichtung (95) in Abhängigkeit des Sensorsignals zu steuern.

5. Beleuchtungssystem (300)
- mit einem Steuergerät (20) nach einem der Ansprüche 1 bis 3, einer Leuchteinrichtung (95) und einem Sensor (50),
- wobei der Sensor (50) und die Leuchteinrichtung (95) mit der Schnittstelle (30) verbunden sind.
- wobei der Sensor (50) in einem Raum eines Gebäudes anordnenbar und ausgebildet ist, ein Raumklima des Raums zu erfassen und in Abhängigkeit des erfassten Raumklimas das Sensorsignal bereitzustellen.

6. Beleuchtungssystem (300) nach Anspruch 5,
- wobei der Sensor (50) ausgebildet ist eine Temperatur und/oder eine Feuchtigkeit eines in dem Raum vorhanden Fluids zu erfassen,
- und/oder wobei der Sensor (50) ausgebildet ist, als Betriebsparameter eine Vorlauftemperatur und/oder eine Temperatur eines Warmwasserspeichers zu erfassen.

7. Beleuchtungssystem (300) nach Anspruch 5 oder 6,
- wobei die Steuereinrichtung (25) ausgebildet ist, mit zunehmender Temperatur und/oder Feuchtigkeit die Farbtemperatur und/oder die Wellenlänge des durch die Leuchteinrichtung abzugebenden Lichts zu reduzieren oder zu vergrößern.

8. Beleuchtungssystem (300) nach einem der Ansprüche 5 bis 7,
- wobei im Speicher (40) ein erster Schwellenwert und ein zum ersten Schwellenwert abweichender zweiter Schwellenwert abgelegt ist,
- wobei der erste Schwellenwert mit einem ersten Raumklima korreliert und der zweite Schwellenwert mit einem zweiten Raumklima korreliert,
- wobei das Steuergerät (20) ausgebildet ist, das Sensorsignal mit den beiden Schwellenwerten zu vergleichen,
- wobei das Steuergerät (20) bei einem Unterschreiten beider Schwellenwerte durch einen zu dem Sensorsignal korrelierenden Wert die Leuchteinrichtung (95) derart ansteuert, dass die Leuchteinrichtung (95) ein Licht mit einer Farbtemperatur oberhalb 12000 K, vorzugsweise oberhalb 14000 K, insbesondere oberhalb 15000 K, und/oder mit wenigstens einer Wellenlänge in einem Bereich von 400 nm bis 490 nm, emittiert,
- wobei das Steuergerät (20) bei einem Unterschreiten des zweiten Schwellenwerts und einem Überschreiten des ersten Schwellenwerts durch einen zu dem Sensorsignal korrelierenden Wert die Leuchteinrichtung (95) derart ansteuert, dass die Leuchteinrichtung (95) ein Licht mit einer Farbtemperatur oberhalb 3000 K, vorzugsweise oberhalb 3300 K und unterhalb 14000 K, insbesondere unterhalb 12000 K emittiert,
- wobei das Steuergerät (20) bei einem Überschreiten beider Schwellenwerte durch einen zu dem Sensorsignal korrelierenden Wert die Leuchteinrichtung (95) derart ansteuert, dass die Leuchteinrichtung (95) ein Licht mit einer Farbtemperatur unterhalb 3300 K, vorzugsweise unterhalb 2500 K, und/oder mit wenigstens einer Wellenlänge in einem Bereich von 590 nm bis 700 nm, emittiert.

9. Beleuchtungssystem (300) nach einem der Ansprüche 5 bis 8, wobei die Leuchteinrichtung (95) ausbildet ist, zumindest teilweise den Raum mit wenigstens 10 Lux, vorzugsweise wenigstens 20 Lux, insbesondere wenigstens 30 Lux, zu beleuchten.

10. Verfahren zum Betrieb eines Steuergeräts (20) gemäß einem der Ansprüche 1 bis 3, eines Steuersystems (10) gemäß Anspruch 4 und/oder eines Beleuchtungssystems (300) nach einem der Ansprüche 5 bis 9,
- wobei ein Raumklima eines Raums eines Gebäudes erfasst wird,
- wobei eine Farbtemperatur und/oder eine Wellenlänge eines durch die Leuchteinrichtung (95) abzugebenden Lichts in Abhängigkeit des Raumklimas gesteuert wird.
